# EUROPÄISCHE PATENTSCHRIFT

(11) **EP 0 803 662 B1**
(45) Veröffentlichungstag und Bekanntmachung des Hinweises auf die Patenterteilung: **02.08.2000**
(21) Anmeldenummer: 97106444.9
(22) Anmeldetag: 18.04.1997
(51) Int. Cl.: F16H 55/17

(54) **Zahnrad mit Bordscheibe für einen Zahnriementrieb**
Toothed wheel with a flanged wheel for a toothed belt drive
Roue dentée avec une poulie à rebord pour une transmission à courroie dentée

(30) Priorität: 23.04.1996 DE 19616149
(43) Veröffentlichungstag der Anmeldung: 29.10.1997
(73) Patentinhaber: Continental Aktiengesellschaft, 30165 Hannover (DE)
(72) Erfinder: von Roenn, Dieter, 31515 Wunstorf (DE); Berger, Ralf, 30559 Hannover (DE)

(56) Entgegenhaltungen:
- EP-A- 0 318 592
- EP-A- 0 458 036
- GB-A- 2 232 222
- US-A- 4 708 700
- US-A- 4 998 906
- PATENT ABSTRACTS OF JAPAN vol. 009, no. 092 (M-373), 20.April 1985 & JP 59 217046 A (HONDA GIKEN KOGYO KK), 7.Dezember 1984,

## Beschreibung

Die Erfindung bezieht sich auf ein Zahnrad für einen Zahnriementrieb mit einer Vielzahl von Zähnen und mit mindestens einer Bordscheibe, wobei mindestens ein Zahn aus der Vielzahl von Zähnen in seiner Höhe reduziert ist, während eine Vielzahl von Zähnen die volle Höhe aufweist. Solche Zahnräder sind der Öffentlichkeit zugänglich in serienmäßigem Einsatz in einigen Nockenwellenantrieben von Hubkolben-Verbrennungsmotoren für PKW.

Diese Technik folgt dem Bestreben, die Gleichmäßigkeit, mit der durch jeden Zahnein- und -auslauf Schwingungsenergie in die schwingfähigen Trume eines Zahnriementriebes eingebracht wird, so zu stören, daß das abgestrahlte Schallspektrum weniger tonal ist, das heißt, daß sich weniger stark die Schallenergie auf solche Frequenzen konzentriert, die in einem ganzzahligen Verhältnis zu einer Grundfrequenz stehen. Wenn man also schon die abgestrahlte Schallenergie nicht senken kann, dann möchte man wenigstens vom Ton weg mehr zum Rauschen kommen, das über längerer Einwirkungszeit in der Regel als weniger unangenehm empfunden wird.

Dieser vorbekannten Technik liegt die Beobachtung zugrunde, daß auch ein ohne Nutzlast umlaufender Zahnriementrieb Geräusche verursacht. Dies führte zu der Erkenntnis, daß der im Zusammenhang mit Kettentrieben bereits ausführlich im Schrifttum behandelte Polygon-Effekt im vorgespannten Riementrieb zu periodischen Schwankungen der Riemenvorspannung führt und dieser Effekt die Geräusche verursacht.

Durch die an einigen Zähnen vorgenommene Reduktion der Zahnkopfhöhe - bis hin zur völligen Eliminierung einzelner Zähne - werden einige der Vorspannungsimpulse reduziert oder gar völlig eliminiert, was die besagte und erstrebte Verungleichmäßigung des Frequenzspektrums bewirkt. Solch eine Maßnahme kann man sich insbesondere an solchen Zahnrädern erlauben, denen nicht die maximal mögliche Leistungsdichte abverlangt wird. Dies trifft insbesondere auf das Abtriebsrad von Wasserpumpen zu, das bisweilen von dem Zahnriemen zwischen Kurbelwelle (als Antriebsrad) und Nockenwelle (als höchstbelastetes Abtriebsrad) mit angetrieben wird, wenn es nicht über einen reibschlüssigen Riemen, z. B. zusammen mit der Lichtmaschine und der Servolenkungspumpe angetrieben wird.

Unglücklicherweise wird das Laufgeräusch solcher Riementriebe bislang nicht als angenehmer empfunden; einige Probehörer empfinden es sogar als unangenehmer. Dies scheint ausweislich der Frequenzspektren daran zu liegen, daß die erreichte Streuung der abgestrahlten Schallenergie nicht allzu groß ist und obendrein scheint die abgestrahlte Schallenergie integriert über den gesamten hörbaren Frequenzbereich, selbst bei einer Gewichtung nach dB(A), höher zu sein als bei einer völlig gleichmäßigen Folge von Zähnen auf dem Zahnrad.

Aus der europäischen Patentanmeldung 0 318 592 ist eine andere Technik der Verteilung der emittierten Schallenergie auf ein breiteres Frequenzband bekannt. Hierbei wird nicht an der Schwingungserregung angegriffen - diese bleibt völlig gleichmäßig periodisch - sondern an der Schwing- und Resonanzfähigkeit der Trume: Im Bereich einer Bordscheibe wird der Riemen stärker vorgespannt als am anderen Rande des Riemens, wo keine Bordscheibe angeordnet ist, was dadurch erreicht ist, daß der Zahnlückengrund und/oder der Zahnkopf aller Zähne abweichend von der Achparallelität nach radial innen eingezogen ist, also konisch gestaltet ist.

Auf diese Weise schwankt die Resonanzfrequenz eines jeden axialen Trumbereiches, sodaß der gesamte Trum im Zusammenspiel all seiner miteinander in Verbindung stehender Axialbereiche weniger scharf ausgeprägte Resonanzmaxima im Frequenzgang erwarten läßt; indessen ist die konische Gestaltung des Zahnlückengrundes aller Zähne vorbekannt aus unserer eigenen deutschen Offenlegungsschrift 39 18 247, siehe dort insbesondere die Figur 5. Die Tests mit einem solchen Zahnrad haben zwar die dort gewünschte selbstreinigende Wirkung bestätigt aber nur eine äußerst geringe Verbesserung des akustischen Verhaltens erbracht.

Aufgabe der Erfindung ist es, einen Riementrieb zu schaffen mit zumindest einem Zahnrad, welches mindestens einen höhenreduzierten Zahn aufweist, dessen Laufgeräusch als angenehmer empfunden wird. Dabei soll bevorzugt zwecks einfacher Logistik an Zahnriemen gleichmäßiger Teilung festgehalten werden.

Der bisherige Übelstand hat die Erfinder zu umfangreichen Geräuschanalysen und Probeanhörungen veranlaßt, wobei sie herausfanden, daß die vorbekannte und oben erläuterte Technik im wesentlichen daran leidet, daß eine ganz neue Geräuschursache eingebaut wurde:

Im Trumein- und -auslauf entstehen Reibungsgeräusche beim Anund Ablaufen der Riemenstirnseiten von den Bordscheiben. Dies liegt wahrscheinlich an den vergrößerten Gleitwegen und der vergrößerten Freiheit des Riemenrückens im Zusammenspiel mit gekürzten oder gar ausgelassenen Zähnen. Ausgehend von dieser in überdurchschnittlich sorgfältiger Arbeit gewonnenen Erkenntnis schlagen die Erfinder zur Abhilfe vor, daß die Zähne reduzierter Zahnhöhe an der Grenze zu einer Bordscheibe die volle Zahnhöhe aufweisen, also nur in dem übrigen Bereich der axialen Erstreckung eine reduzierte Zahnhöhe aufweisen.

Die volle Zahnhöhe eines erfindungsgemäßen Zahnrades im Randbereich einer Bordscheibe führt zum Aufsetzen des Riemensteges auf dem betreffenden Kopf des Zahnrades. Auf diese Weise ist der Riemenrücken und die Riemenstirnseite im Bereich des An- und Ablaufes an eine Bordscheibe so geführt, wie das auch an den konventionellen Riementrieben mit gleichen Zähnen am Zahnrad der Fall ist und wo keine Reibungsgeräusche störten. Darüberhinaus wird für die Zahnriementriebe mit einem erfindungsgemäßen Zahnrad eine höhere Lebensdauer erwartet als für die Zahnriementriebe mit einem Zahnrad, das über der gesamten axialen Erstreckung Zähne reduzierter Höhe enthält, da dort, wo Reibungsgeräusche entstehen, erfahrungsgemäß auch Abrieb entsteht; dieser Abrieb dürfte mit der Erfindung zumindest reduziert sein.

Um eine optimale Lebensdauer zu erreichen, sollte vorzugsweise an den Zähnen reduzierter Zahnhöhe der Übergang von der vollen Zahnhöhe an einer Bordscheibe auf eine reduzierte Zahnhöhe über der Axialen stetig erfolgen. So wird nämlich eine Kerbwirkung im Bereich der Zahnkopfhöhenreduktion vermieden.

Um eine ausreichende Drehmomentübertragungsfähigkeit aufrecht zu erhalten, sollte mindestens jeder dritte Zahn des Zahnrades ungekürzt sein; vorzugsweise sollten insbesondere bei kleinen Zahnrädern und kleinen Umschlingungswinkeln, wobei weniger als 10 Zähne gleichzeitig mit dem Riemen im Eingriff stehen, nie zwei gekürzte Zähne aufeinander folgen, also mindestens jeder zweite Zahn ungekürzt sein.

In solchen Anwendungsfällen, wo zwei gekürzte Zähne hintereinander zugelassen werden können, kann der Kürzungsbetrag unterschiedlich sein, um auf diese Weise das Maß der Ungleichmäßigkeit zu steigern. Allerdings wird hierdurch die Herstellung des Urmodells, nach dem die Negativform geschmiedet oder gegossen wird, teurer. Darüberhinaus wird es schwieriger, den Abrieb am Zahnrad in einer einfachen Sichtkontrolle zu überprüfen.

Deshalb wird in einem solchen Falle eine andere Maßnahme zur Steigerung der Ungleichmäßigkeit bevorzugt: Unmittelbar aufeinander folgende Zähne reduzierter Zahnhöhe sollten unterschiedliche Breiten der axialen Bereiche aufweisen, in denen die Zahnhöhe kleiner als die volle Zahnhöhe ist. Dabei ist vorzugsweise die Zahnhöhenreduktion der beiden aufeinander folgenden Zähne identisch; es gibt dann nur zwei unterschiedliche Zahnhöhen, nämlich die volle Zahnhöhe, wie sie genormt ist und eine reduzierte Zahnhöhe, die im Extremfall 0 sein kann.

Die Beschränkung auf eine Variation der Breite der gekürzten Kopfbereiche hält die Produktionskosten niedrig und zeigt eine gute Wirksamkeit auf die Schallenergieverteilung über dem Freqenzgang.

Auch bei nicht unmittelbar aufeinander folgenden Zähnen reduzierter Höhe empfiehlt es sich, daß verschiedene Zähne reduzierter Höhe ein verschiedenes Breitenintervall aufweisen, innerhalb dessen die Zahnhöhe reduziert ist. Auch dies dient der Streuung der Schallenergie über breitere Frequenzbänder.

Vorzugsweise betragen die Breiten der axialen Bereiche, in denen mindestens ein Zahn eine reduzierte Zahnhöhe aufweist, also die Zahnhöhe kleiner als die volle Zahnhöhe ist, zwischen 25% und 95% der vollen Zahnbreite.

Der Kern der Erfindung ist also der, daß die an sich bekannte Reduktion der Zahnkopfhöhe einiger Zähne nicht mehr die gesamte Baubreite des Zahnrades erfassen soll, daß nämlich der Randbereich oder die beiden Randbereiche des Zahnrades, die durch durch eine Bordscheibe beziehungsweise zwei Bordscheiben abgeschlossen ist bzw. sind, von der Zahnkopfhöhenreduktion ausgenommen sind.

Der Begriff "Zahnkopfhöhenreduktion" muß nicht verfahrenstechnisch verstanden werden; zwar kann ein erfindungsgemäßes Zahnrad dadurch gewonnen werden, daß ausgehend von einem genormten Zahnrad gleichmäßiger Zahnkopfhöhe aller Zähne und achsparalleler Gestalt sowohl aller Lückengründe als auch aller Zahnköpfe im Querschnitt einzelne Zahnköpfe - vorzugsweise am Urmodell - durch Abfräsen in ihrer Höhe reduziert werden, jedoch könnte man auch von einem Zahnrad kleinerer (aber auch gleichmäßiger) Zahnkopfhöhe aller Zähne und achsparalleler Gestalt sowohl aller Lückengründe als auch aller Zahnköpfe im Querschnitt ausgehen und einzelne Zahnköpfe - vorzugsweise am Urmodell - durch Aufschweißen oder dergleichen in ihrer Höhe vergrößern; aber auch bei solchem Vorgehen sollte der Vollendung der Fertigung größte Kopfkreisdurchmesser des Zahnrades an einem solchen Rande des Zahnrades liegen, wo eine Bordscheibe angeordnet ist beziehungsweise - bei Verwendung einer Bordscheibe auf beiden Seiten - sollte in beiden angrenzenden Randbereiche der größte Kopfkreisdurchmesser vorliegen.

Die Erfindung wird nachfolgend anhand eines Ausführungsbeispieles näher erläutert. Das beispielhafte Zahnrad ist zum Antrieb einer Wasserpumpe über einen Zahnriemen gedacht. Es soll 23 Zähne aufweisen; üblich sind für einen solchen Anwendungsfall Zähnezahlen zwischen 18 und 24. Das beispielhafte Zahnrad habe nur an einem seiner beiden Ränder eine Bordscheibe.

Es wird zunächst tabellarisch eine Zahnkopfhöhenfolge angegeben, wobei "v" für die volle Zahnkopfhöhe über der gesamten Radbreite steht, "b" für eine Zahnkopfhöhenreduktion über 90% der Zahnradbreite, wobei ein schmaler Bereich von 10% der Zahnradbreite angrenzend an die eine Bordscheibe die volle Zahnhöhe zeigt, und "a" für eine Zahnkopfhöhenreduktion über 70% der Zahnradbreite, wobei ein schmaler Bereich von 20% der Zahnradbreite angrenzend an die eine Bordscheibe die volle Zahnhöhe zeigt genauso wie ein auf der gegenüberliegenden Seite plazierter schmaler Bereich von 10% der Zahnradbreite.
v, v, a, b, v, b, v, v, v, a, v, v, b, v, v, v, v, a, v, b, v, v, a.

Dieses Ausführungsbeispiel wird nachfolgend mit vier Figuren im Maßstab 2:1 näher erläutert. Es zeigt:
- Fig. 1: eine Abwicklung eines erfindungsgemäßen Zahnrades in solchem Querschnitt, daß ein Zahn der reduzierten Zahnkopfhöhe a sichtbar ist,
- Fig. 2: eine Abwicklung des gleichen Zahnrades in einem solchen anderen Querschnitt, daß ein Zahn der reduzierten Zahnkopfhöhe b sichtbar ist,
- Fig. 3: das gleiche Zahnrad realiter - also nicht in einer Abwicklung, sondern wirklichkeitsgerecht - in einem Längsschnitt von links gesehen und
- Fig. 4: das gleiche Zahnrad realiter in einem Längsschnitt von rechts gesehen.

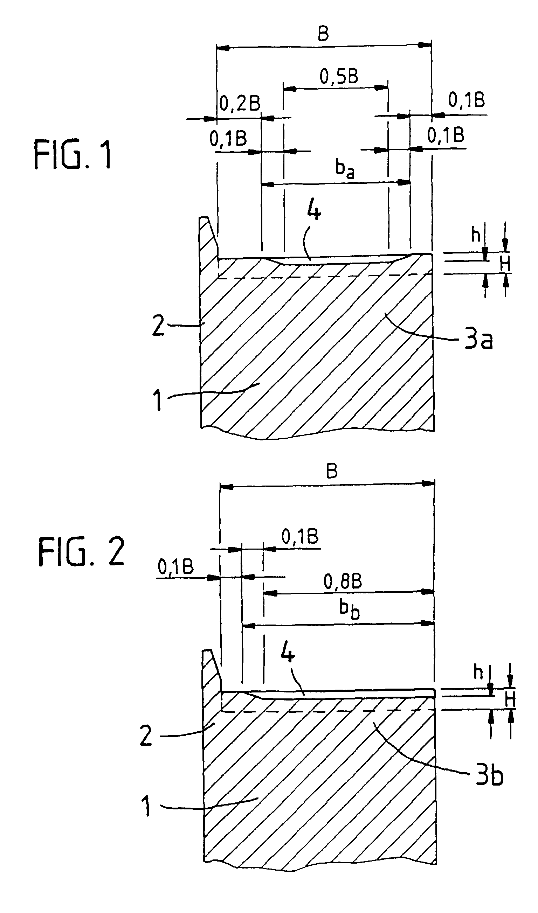

Figur 1 zeigt eine Abwicklung dieses Zahnrades 1 im Querschnitt, wobei die Schnittebene durch einen Zahn 3a der reduzierten Zahnkopfhöhe "a" gelegt ist. Hinter dem im axial inneren Bereich gekürzten Zahn 3a ist in Ansicht ein ungekürzter Zahn 4 zu erkennen. Um den direkten Höhenvergleich zu ermöglichen, ist nicht das Zahnrad selber dargestellt, sondern dessen Abwicklung, also eine Darstellung, in der die tatsächliche Krümmung des Radteilkreises ignoriert ist und die Teilungslinie stattdessen als eine Gerade aufgefaßt wird, die senkrecht zur Bildebene steht. Der Zahn 4 hat über seine gesamte axiale Erstreckung die Zahnhöhe H, die vom Fußkreis bis zum Kopfkreis zu messen ist; der geschnittene Zahn 3a hat diese volle Zahnhöhe hingegen nur in den beiden Randbereichen, dazwischen hat er eine reduzierte Zahnhöhe.

Wenn die Zahnkopfhöhe von links nach rechts verfolgt wird, so beträgt sie H - abgesehen von einer kleinen Randfase - von 0% bis 20% der Zahnradbreite, sinkt von 20% bis 30% der Zahnradbreite linear auf h, bleibt von 30% bis 80% der Zahnradbreite bei h, steigt von 80% bis 90% der Zahnradbreite linear wieder auf die volle Zahnhöhe H und bleibt dort schließlich - abgesehen von einer weiteren kleinen Randfase - unverändert bei H.

Figur 2 zeigt eine Abwicklung dieses Zahnrades im Querschnitt, wobei die Schnittebene durch einen Zahn 3b der reduzierten Zahnkopfhöhe "b" gelegt ist. Hinter dem bereichsweise gekürzten Zahn 3b ist in Ansicht ein ungekürzter Zahn 4 zu erkennen, wie bereits in Figur 1 beschrieben. Der geschnittene Zahn 3b hat die volle Zahnhöhe H nur in dem linken Randbereich, der an die Bordscheibe 2 grenzt. Rechts davon hat er eine reduzierte Zahnhöhe.

Wenn die Zahnkopfhöhe von links nach rechts verfolgt wird, so beträgt sie H - abgesehen von einer kleinen Randfase - von 0% bis 10% der Zahnradbreite, sinkt von 10% bis 20% der Zahnradbreite linear auf h und bleibt dabei bis zum rechten Rand.

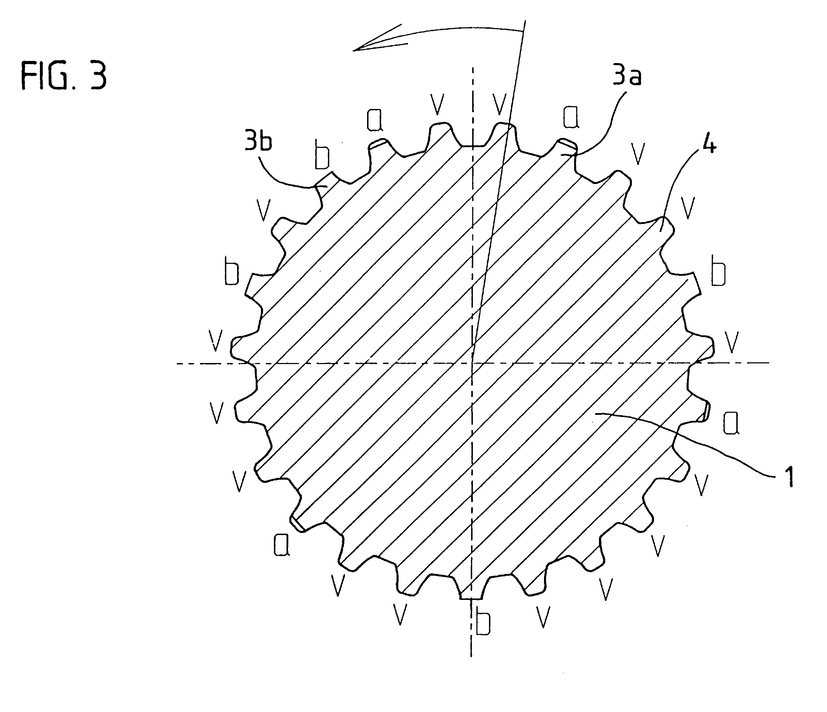

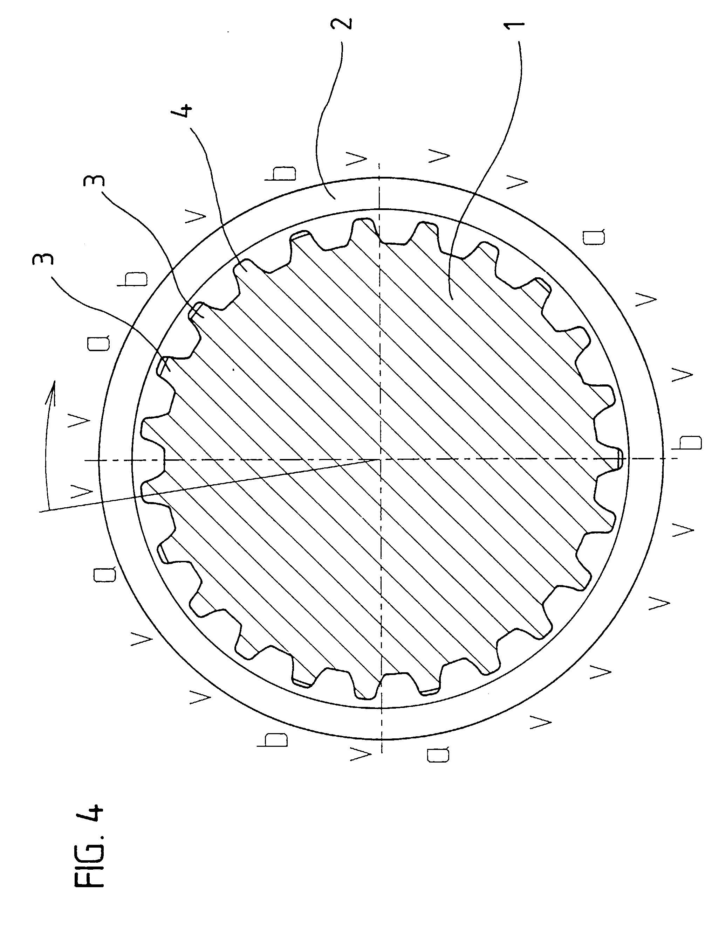

Die Figuren 3 und 4 zeigen das gleiche Zahnrad 1 realiter im mittigen Längsschnitt und zwar Figur 3 von links gesehen und Figur 3b von rechts gesehen.

Die Figur 3 zeigt fünfzehn Zähne 4 der vollen Zahnhöhe H, vier Zähne 3a der reduzierten Zahnhöhe h in der Schnittebene und der vollen Zahnhöhe H am dahinter sichtbaren rechten Rande des Zahnrades, wo keine Bordscheibe angeordnet ist und weitere vier Zähne 3b der reduzierten Zahnhöhe h in der Schnittebene ohne Wiederanstieg der Zahnhöhe auf die volle Zahnhöhe H. Unbeschadet dessen, daß die reduzierte Zahnhöhe h im Extremfall auch Null sein darf, der betreffende Zahn also komplett ausgelassen sein darf, ist hier nur die bevorzugte Reduktion der Zahnhöhe auf etwa 80% der vollen Zahnhöhe H dargestellt, die bereits zu einer befriedigenden Resonanzverstimmung des Riemens führt bei einer kleineren Zugsteifigkeitsschwankung des im Eingriff befindlichen Riemens als bei völliger Zahnauslassung. Die 20%ige Zahnhöhenreduktion verhindert bereits in den Axialbereichen der Reduktion das Aufsetzen des Riemensteges auf den gekürzten Zahnköpfen des Zahnrades.

Figur 4 zeigt demgegenüber die Ansicht von rechts auf den linken Teil des durch den mittigen Längsschnitt zerlegten Zahnrades 1. Im Hintergrund ist als großer konzentrischer Kreis der radial äußere Rand der Bordscheibe 2 zu sehen.

Wie bereits in Figur 3, so sind auch hier - entsprechend der anderen Blickrichtung natürlich im inversen Drehsinn verteilt - fünfzehn Zähne 4 der vollen Zahnhöhe H zu sehen. Die insgesamt acht Zähne 3 reduzierter Zahnhöhe h zeigen hingegen in dieser Ansicht keine Unterschiede und sind deshalb auch nicht nach 3a und 3b unterschieden. Vielmehr zeigen alle Zähne 3 in dieser Abbildung im Schnitt die reduzierte Zahnhöhe h und dahinter - in Ansicht auf den an die Bordscheibe 2 grenzenden Bereich - die volle Zahnhöhe H. Dadurch, daß alle dreiundzwanzig Zähne des Zahnrades 1 in dem an die Bordscheibe 2 grenzenden Bereich die volle Zahnhöhe H aufweisen, läuft die linke Stirnseite des nicht dargestellten Riemens besonders genau geführt an die Bordscheibe 2 an und verursacht dort nahezu keine Reibungsgeräusche und keinen Abrieb, weder am erfindungsgemäßen Zahnrad noch am unveränderten Riemen; eine Frequenzstreuung des emittierten Geräusches durch unterschiedliche Resonanzfrequnezen im axial mittleren Bereich des Riementrumes, wobei diese Unterschiede sich über der Phasenlage des erfindungsgemäßen Rades zudem noch ändern, ist dennoch erreicht.

Analog sollte die Verzahnung eines Zahnrades, das im Gegensatz zu obigem Beispiel auf beiden Seiten eine Bordscheibe hat, an beiden Rändern an allen Zähnen die volle Zahnhöhe haben; es sollten also nur in einem axial inneren - nicht unbedingt mittigen oder in einer geraden Spur sich erstreckenden - Bereich einige Zähne eine Zahnhöhenreduktion aufweisen.

Der axiale Randbereich bzw. die axialen Randbereiche, in denen erfindungsgemäß - trotz Zahnhöhenreduktion im Abstand zu jeder Borscheibe - jeder Zahn die volle Zahnhöhe hat, sollte eine Breite von 2% der Radbreite oder mehr haben, vorzugsweise 6% bis 12%.

Eine Bezugszeichenliste ist Bestandteil der Beschreibung.

### Bezugszeichenliste:

- 1: Zahnrad zur Aufnahme eines Zahnriemens
- 2: Bordscheibe
- 3: Zahn von 1 mit reduzierter Zahnhöhe h in einem axialen Bereich, der nirgends bis zu einer Bordscheibe reicht
3a Zahn von 1 mit reduzierter Zahnhöhe h in einem axialen Bereich, der nirgends bis zu einer Bordscheibe reicht
3b Zahn von 1 mit reduzierter Zahnhöhe h in einem axialen Bereich, der nirgends bis zu einer Bordscheibe reicht
- 4: Zahn von 1 mit voller Zahnhöhe H über dem gesamten axialen Bereich
- b: Breite des Bereiches, in denen ein Zahn 3 eine reduzierte Zahnhöhe aufweist
bₐ Breite des Bereiches, in denen ein Zahn 3a eine reduzierte Zahnhöhe aufweist
b_{b} Breite des Bereiches, in denen ein Zahn 3b eine reduzierte Zahnhöhe aufweist
- B: Zahnbreite von 1
- h: reduzierte Zahnhöhe
- H: volle Zahnhöhe

## Patentansprüche

1. Zahnrad (1) für einen Zahnriementrieb mit einer Vielzahl von Zähnen (3, 4) und mit mindestens einer Bordscheibe (2), wobei mindestens ein Zahn (3) aus der Vielzahl von Zähnen (3, 4) in seiner Höhe (h) reduziert ist, während eine Vielzahl von Zähnen (4) die volle Höhe (H) aufweist,
**dadurch gekennzeichnet,** daß die Zähne (3) reduzierter Zahnhöhe (h) an der Grenze zu der Bordscheibe (2) die volle Zahnhöhe (H) aufweisen, also nur in dem übrigen Bereich der axialen Erstreckung eine reduzierte Zahnhöhe (h) aufweisen.

2. Zahnrad (1) nach Anspruch 1, dadurch gekennzeichnet, daß an den Zähnen (3) reduzierter Zahnhöhe der Übergang von der vollen Zahnhöhe (H) an einer Bordscheibe (2) auf eine reduzierte Zahnhöhe (h) über der Axialen stetig erfolgt.

3. Zahnrad (1) nach einem der vorangehenden Ansprüche, dadurch gekennzeichnet, daß unmittelbar aufeinander folgende Zähne (3a, 3b) reduzierter Zahnhöhe (h) unterschiedliche Breiten (bₐ bzw. b_{b}) der axialen Bereiche aufweisen, in denen die Zahnhöhe kleiner als die volle Zahnhöhe (H) ist.

4. Zahnrad (1) nach einem der vorangehenden Ansprüche, dadurch gekennzeichnet, daß die Breiten (b, bₐ, b_{b}) der axialen Bereiche, in denen mindestens ein Zahn (3) eine reduzierte Zahnhöhe (h) aufweist, also die Zahnhöhe kleiner als die volle Zahnhöhe (H) ist, zwischen 25% und 95% der vollen Zahnbreite (B) beträgt.

5. Zahnrad (1) nach einem der vorangehenden Ansprüche, dadurch gekennzeichnet, daß der größte Kopfkreisdurchmesser des Zahnrades (1) an einem solchen Rande des Zahnrades liegt, wo eine Bordscheibe angeordnet ist.

## Claims

1. Toothed wheel (1) for a toothed belt drive, having a plurality of teeth (3,4) and having at least one flanged disc (2), at least one tooth (3) from the plurality of teeth (3, 4) being reduced in respect of its height (h), while a plurality of teeth (4) have the full height (H), characterised in that the teeth (3) of reduced tooth height (h) have the full tooth height (H) at the boundary with the flanged disc (2), that is to say they only have a reduced tooth height (h) in the remaining region of the axial extension.

2. Toothed wheel (1) according to claim 1, characterised in that, on the teeth (3) of reduced tooth height, the transition from the full tooth height (H) on one flanged disc (2) to a reduced tooth height (h) is steadily effected axially.

3. Toothed wheel (1) according to one of the preceding claims, characterised in that teeth (3a, 3b) of reduced tooth height (h), which immediately follow one another, have variable widths (bₐ or respectively b_{b}) of the axial regions in which the tooth height is less than the full tooth height (H).

4. Toothed wheel (1) according to one of the preceding claims, characterised in that the widths (b, bₐ, b_{b}) of the axial regions, in which at least one tooth (3) has a reduced tooth height (h), that is to say the tooth height is less than the full tooth height (H), are between 25 % and 95 % of the full tooth width (B).

5. Toothed wheel (1) according to one of the preceding claims, characterised in that the maximum tip outside diameter of the toothed wheel (1) lies at the edge of the toothed wheel where a flanged disc is disposed.

## Revendications

1. Roue dentée (1) pour une transmission à courroie dentée, comportant une pluralité de dents (3, 4) et avec au moins une poulie à rebord (2), où au moins une dent (3) issue de la pluralité des dents (3, 4) a sa hauteur (h) diminuée, tandis qu'une pluralité de dents (4) présentent la pleine hauteur (H), caractérisée en ce que les dents (3) à hauteur de dent (h) diminuée présentent la pleine hauteur de dent (H) à la limite de la poulie à rebord (3), donc ne présentent une hauteur de dent réduite (h) que dans la zone restante de l'étendue axiale.

2. Roue dentée (1) selon la revendication 1, caractérisée en ce que, sur les dents (3) à hauteur de dent réduite, la transition entre la pleine hauteur de dent (H) sur une poulie à rebord (1) à une hauteur de dent réduite (h) s'effectue par une évolution progressive continue en direction axiale.

3. Roue dentée (1) selon l'une des revendications précédentes, caractérisée en ce que des dents (3a, 3b) à hauteur de dent réduite (h), qui se suivent directement les unes des autres, ont des largeurs (bₐ ou b_{b}) différentes pour les zones axiales dans lesquelles la hauteur de dent est inférieure à la pleine hauteur de dent (H).

4. Roue dentée (1) selon l'une des revendications précédentes, caractérisée en ce que les largeurs (b,bₐ,b_{b}) des zones axiales dans lesquelles au moins une dent (3) a une hauteur de dent réduite (h), donc la hauteur de dent étant inférieure à la pleine hauteur (H), sont comprises entre 25 % et 95 % de la pleine largeur de dent (B).

5. Roue dentée (1) selon l'une des revendications précédentes, caractérisée en ce que le diamètre de cercle de tête maximal de la roue dentée (1) est placé sur un bord de la roue dentée où une poulie à rebord est disposée.
